# EUROPÄISCHE PATENTSCHRIFT

(11) **EP 1 355 075 B1**
(45) Veröffentlichungstag und Bekanntmachung des Hinweises auf die Patenterteilung: **25.05.2005**
(21) Anmeldenummer: 03004698.1
(22) Anmeldetag: 04.03.2003
(51) Int. Cl.: F16D 65/12

(54) **Verbund-Bremsscheibe für eine Fahrzeug-Scheibenbremse**
Assembled brake disc for a vehicle disc brake
Disque de frein assemblé pour frein à disque de véhicule

(30) Priorität: 19.04.2002 DE 10217616
(43) Veröffentlichungstag der Anmeldung: 22.10.2003
(73) Patentinhaber: Bayerische Motoren Werke Aktiengesellschaft, 80809 München (DE)
(72) Erfinder: Ehrentreich, Franz, 86551 Aichach (DE); Heidenthaler, Martin, 83417 Kirchanschöring (DE); Lichte, Andreas, 80992 München (DE); Maier, Ernst, 85570 Markt Schwaben (DE); Blechinger, Gerd, 81927 München (DE); Schubert, Christian, 81677 München (DE)

(56) Entgegenhaltungen:
- EP-A- 1 128 084
- DE-A- 1 775 685
- DE-A- 10 032 972

## Beschreibung

Die Erfindung betrifft eine Verbund-Bremsscheibe für eine Fahrzeug-Scheibenbremse mit einem Bremsscheibentopf, an dem ein Bremsscheiben-Reibring oder ein den oder die Reibringe tragender Mitnehmer abseits der Reibring-Ebene über einen geeigneten Vorsprung befestigt ist, wozu der sich parallel zur Bremsscheiben-Drehachse erstreckende im wesentlichen ringförmige Vorsprung in Radialrichtung betrachtet bevorzugt innerhalb der in diesem Befestigungsbereich gegebenenfalls geringfügig geschwächten Wand des Bremsscheibentopfes liegt und Nieten oder ähnliche Verbindungselemente zwischen der Topfwand und dem Vorsprung vorgesehen sind. Zum technischen Umfeld wird auf die DE 100 32 972 A1 verwiesen.

Verbund-Bremsscheiben an sich sind zumindest im druckschriftlichen Stand der Technik in unterschiedlichen Ausführungsarten bekannt und zeichnen sich durch den Vorteil aus, dass der Bremsscheiben-Reibring einerseits, auf welchem bekanntermaßen die Reibbeläge der Scheibenbremse zum Anliegen gebracht werden, und der sog. Bremsscheibentopf andererseits, mit welchen die Scheibenbremse an einem Radträger oder dgl. des Fahrzeugs befestigt wird, aus für die jeweiligen Anforderungen günstigen Materialien gefertigt sein können. Hierdurch kann bspw. zum einen eine Gewichtsersparnis erzielt werden, und zum anderen ist damit eine vorteilhafte Entkoppelung zwischen dem Reibring und dem Bremsscheibentopf möglich. Zumindest an Großserien-Personenkraftwagen, bei denen aufgrund der erforderlichen Abbremsung aus teilweise hohen Geschwindigkeiten hohe Anforderungen an die Bremsscheibe gestellt werden, haben sich solche Verbund-Bremsscheiben noch nicht durchgesetzt. Gleiches gilt für Verbund-Bremsscheiben mit sog. Mitnehmern, die die eigentlichen Reibringe tragen, und für die ein Beispiel in der (nicht vorveröffentlichten) deutschen Patentanmeldung 101 04 039.3 gezeigt ist.

In der eingangs genannten DE 100 32 972 ist eine Verbund-Bremsscheibe nach dem Oberbegriff des Anspruchs 1 aufgezeigt, die die wesentlichen Anforderungen in nahezu optimaler Weise erfüllen kann, jedoch ist diese bekannte Verbund-Bremsscheibe optimal für diejenigen Räder eines Fahrzeugs geeignet, an denen lediglich eine Betriebsbremse (in Form der Scheibenbremse) angreift. Für eine weitere Hilfsbremse, die bevorzugt auch als Feststellbremse fungieren kann, und die üblicherweise in Form einer Trommelbremse ausgebildet ist, ist die bekannte Verbund-Bremsscheibe wegen des Fehlens einer ausreichend breiten Anlauffläche für die Bremsbeläge einer Trommelbremse weniger geeignet. Theoretisch könnte zwar auch die Innenwand des Bremsscheibentopfes als Anlauffläche einer Trommelbremse fungieren, jedoch ist dies dann ausgeschlossen, wenn der Bremsscheibentopf in einer Leichtmetall-Legierung ausgeführt ist, was unter Gewichts-Gesichtspunkten nicht nur vorteilhaft ist, sondern insbesondere dann, wenn eine höherfeste Leichtmetall-Legierung zum Einsatz kommt, unter Festigkeits-Gesichtspunkten auch möglich ist.

Hiermit soll nun eine Verbundbremsscheibe nach dem Oberbegriff des Anspruchs 1 aufgezeigt werden, die nicht nur als Scheibenbremse, sondern auch als Trommelbremse fungieren kann, und somit bspw. für eine Duo-Servo-Bremse an der Hinterachse von Personenkraftwagen eingesetzt werden kann (= Aufgabe der vorliegenden Erfindung).

Die Lösung dieser Aufgabe ist dadurch gekennzeichnet, dass die (genannten) Verbindungselemente (zwischen dem Bremsscheibentopf und dem Vorsprung des Reibrings bzw. Mitnehmers) in Radialrichtung derart weit außen liegen, dass die der Drehachse zugewandte Innenwand des Vorsprungs als Anlauffläche einer Trommelbremse fungieren kann. Vorteilhafte Aus- und Weiterbildungen sind Inhalt der Unteransprüche.

Erfindungsgemäß übernimmt der sog. Vorsprung eines Reibrings oder Reibring-Mitnehmers, an dem (im Hinblick auf die mechanische und thermische Bremsscheibenbelastung wie in der eingangs genannten Schrift angegeben besonders günstig) der Bremsscheibentopf befestigt ist, gleichzeitig die Funktion einer Anlauffläche für eine Trommelbremse, d.h. der sog. Vorsprung fungiert gleichzeitig als Bremstrommel. Dabei ist es durchaus denkbar, dass der Vorsprung in Axialrichtung betrachtet lediglich einen Teilbereich der Bremstrommel bildet, wenn auch an der Innenseite des sich in Axialrichtung an die Innenwand des Vorsprungs anschließenden Topfwand (des Bremsscheibentopfes) die Reibbeläge der Trommelbremse zum Anliegen gebracht werden können. Letzteres ist jedoch evtl. weniger günstig, wenn der Bremsscheibentopf in einer bevorzugt höherfesten Leichtmetall-Legierung ausgeführt ist, jedoch ist die vorliegende Erfindung - obwohl ein derartiges Material unbestreitbare Vorzüge hat - nicht auf ein solches Bremsscheibentopf-Material beschränkt.

Wie in der bereits genannten DE 100 32 972 A1 angegeben, kann es ausreichend sein, den Fügebereich bw. die Fügestelle zwischen dem Vorsprung und dem Bremsscheibentopf als Press- oder Schrumpfsitz auszubilden, jedoch erhöhen zusätzliche, im wesentlichen in Radialrichtung (bezüglich der Bremsscheiben-Drehachse) vorgesehene Verbindungselemente, bei denen es sich bspw. um Nieten, aber auch um Schrauben oder dgl. handeln kann, die Sicherheit dieses Verbundes. Dann jedoch sollten diese Verbindungselemente so angeordnet sein, dass sie die Funktion der Vorsprung-Innenwand als Anlauffläche einer Trommelbremse nicht stören. Allgemein betrachtet sind also die Verbindungselemente als Ganzes hierfür in Radialrichtung soweit außen, d.h. von der Bremsscheiben-Drehachse entfernt angeordnet, dass die Bremsbeläge der Trommelbremse beim Betätigen derselben, d.h. beim Anlegen an die Innenwand des Vorsprungs, mit diesen Verbindungselementen nicht in Kontakt kommen können.

Konkret kann hierfür ein Kopfteil oder dgl. der Verbindungselemente zumindest im wesentlichen in der Wand des Vorsprungs versenkt sein, so bspw. ein Nietkopf oder ein Schraubenkopf oder ähnliches, so dass das Bremselement oder der Bremsbelag der Trommelbremse an die Vorsprung-Wand angelegt werden kann, ohne hierbei - wenn die Bremsscheibe und somit die Bremstrommel rotiert - in Kontakt mit den Verbindungselementen zu kommen. Sollte dieses Versenken in der Wand des Vorsprungs nicht soweit wie eigentlich erforderlich möglich sein, da für die Funktionserfüllung des Verbindungselementes noch eine gewisse Rest-Wandstärke des Vorsprungs benötigt wird, so kann ein Kopfteil oder dgl. der Verbindungselemente nach Herstellen der Verbindung soweit mechanisch abgetragen oder umgeformt werden, dass die der Drehachse zugewandte Innenwand des Vorsprungs in jedem Fall problemlos als Anlauffläche einer Trommelbremse fungieren kann.

Es sei noch darauf hingewiesen, dass die Topfwand, d.h. die Wand bzw. der Mantel des Bremsscheibentopfes im sog. Befestigungsbereich, in dem die Verbindung mit dem sog. Vorsprung des Reibringes oder des genannten Reibring-Mitnehmers hergestellt ist, zumindest geringfügig geschwächt sein kann, um eine gewisse Elastizität zu schaffen, jedoch handelt es sich hierbei um kein für die Funktion der vorliegenden Erfindung erforderliches Merkmal. Auch muss der sog. Vorsprung nicht über seiner gesamten axialen Länge einen geschlossenen Kreisring bzw. geschlossenen kreisförmigen Zylinder bilden, sondern kann durchaus zumindest abschnittsweise in Umfangsrichtung nebeneinander angeordnete und dabei voneinander getrennte Vorsprünge oder Zungen oder dgl. aufweisen, weshalb der Vorsprung im vorangegangenen Text als "im wesentlichen ringförmig" beschrieben wurde. Ferner sei noch erwähnt, dass der im wesentlichen ringförmige Vorsprung in Radialrichtung betrachtet zwar bevorzugt innerhalb der Wand oder dem Mantel des Bremsscheibentopfes liegt, alternativ jedoch auch in Radialrichtung von außen an der Topfwand anliegen kann.

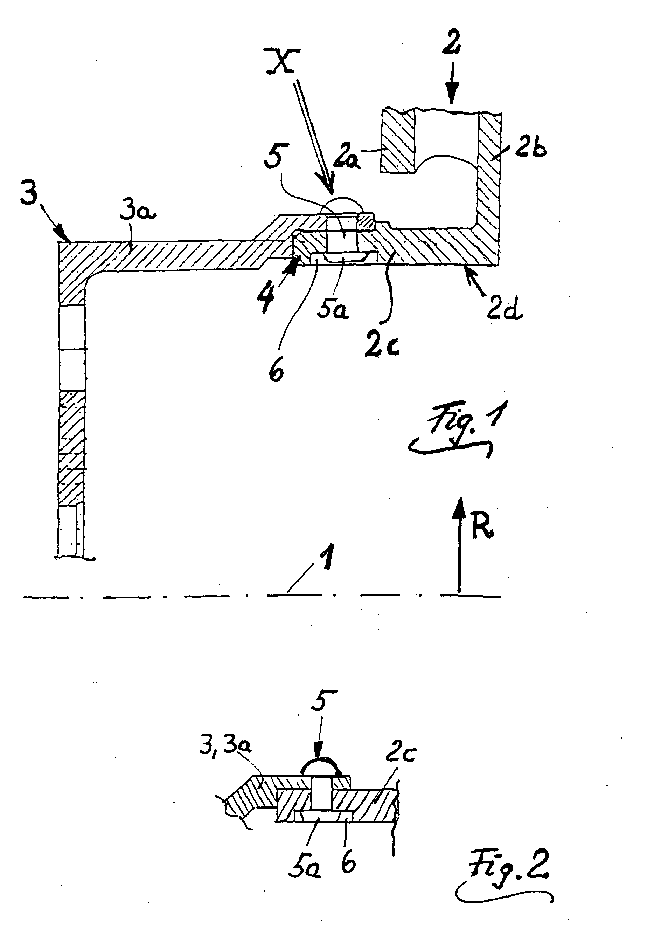

Im folgenden wird die Erfindung anhand eines bevorzugten Ausführungsbeispieles weiter erläutert, wobei die beigefügte **Figur 1** einen Teil-Schnitt einer erfindungsgemäßen Verbund-Bremsscheibe und **Figur 2** in Form eines Ausschnitts X aus Fig.1 eine geringfügige Abwandlung hiervon zeigt. Dabei sei ausdrücklich darauf hingewiesen, dass zwar hier der sog. Vorsprung von einem der Reibringe der Bremsscheibe abzweigt, dass alternativ jedoch der sog. Vorsprung auch ein Bestandteil eines sog. Mitnehmers sein kann, an dem wiederum der Reibring oder mehrere Reibringe befestigt ist/sind.

Mit der Bezugsziffer 1 ist nun die Drehachse der Verbund-Bremsscheibe bezeichnet, die aus einem Reibring 2 sowie einem Bremsscheibentopf 3 zusammengesetzt ist. In einer sog. Fügestelle 4 sind diese beiden Elemente miteinander verbunden. Wie ersichtlich ist diese Fügestelle 4 dadurch gebildet, dass vom Innenumfang des Reibringes 2 ein bezüglich der Drehachse 1 kreiszylindrischer und somit zu dieser paralleler Vorsprung 2c abragt, auf welchem der Bremsscheibentopf 3 mit einem Ringabschnitt seines Mantels 3a aufliegt. Dabei ist die Fügestelle 4, d.h. die Verbindung zwischen dem Mantel 3a des Bremsscheibentopfes 3 und dem Vorsprung 2c des Reibringes 2 als Preß- oder Schrumpfsitz ausgebildet.

Wie ersichtlich handelt es sich bei sämtlichen Ausführungsbeispielen um einen belüfteten Reibring 2 mit einer vorderen Ringscheibe 2a und einer hinteren Ringscheibe 2b, wobei die vorliegende Erfindung jedoch ebenso bei einem massiven (einzigen) Reibring umsetzbar ist. Hier ragt der Vorsprung 2c von der hinteren (rechten) Ringscheibe 2b ab, um eine ausreichend breite Reibfläche 2d an der Innenwand dieses Vorsprungs 2c zu schaffen, die dann insbesondere für eine Duo-Servo-Feststellbremse, allgemein für eine Trommelbremse, herangezogen werden kann.

Wie ersichtlich ist die als Preß- oder Schrumpfsitz ausgebildete Fügestelle 4 durch zumindest ein, insbesondere jedoch mehrere über dem Umfang verteilt angeordnete, im wesentlichen senkrecht zur Drehachse 1 (d.h. in Radialrichtung R) ausgerichtete(s) Verbindungselement(e) 5 gesichert, das bzw. die hier in Form eines Nietes ausgebildet ist/sind, das/die aber auch als Schraube oder in ähnlicher Weise wirkend ausgebildet sein kann.

Wie ersichtlich ist es praktisch kaum möglich, bei Einhaltung einer üblichen bzw. kleinstmöglichen Bauraum-Breite eine ausreichend breite Reibfläche 2d (in Richtung der Drehachse 1 gemessen) für eine Trommelbremse zu erhalten, ohne dass in dieser Reibfläche 2d das oder die Verbindungselement(e) 5 zum Liegen kommt/kommen. Um zu verhindern, dass diese Verbindungselemente 5 gravierende Störstellen für den auf der Reibfläche 2d anliegenden Bremsbelag der Trommelbremse bilden, liegen diese in Radialrichtung R betrachtet soweit außen als möglich, d.h. von der Drehachse 1 beabstandet, was dadurch erreicht ist, dass ein Kopfteil 5a jedes Verbindungselements 5 in der Wand des Vorsprungs 2c bzw. in einer darin eingebrachten Einsenkung 6 versenkt ist.

Vorteilhafterweise bildet diese Einsenkung 6, die in einer Weiterbildung als bezüglich der Drehachse 1 umlaufende Nut ausgebildet sein kann, einen Bereich erhöhter Elastizität, ebenso wie ein Bereich erhöhter Elastizität am Mantel 3a des Bremsscheibentopfs 3 nahe der Fügestelle 4 vorliegt, wo der Mantel 3a eine verringerte Wandstärke besitzt. Aufgrund dieser Elastizitäten können insbesondere thermische Spannungen, die aus unterschiedlichen Wärmeausdehnungskoeffizienten der einzelnen Bestandteile des Verbundbremsscheibe resultieren, zumindest teilweise kompensiert werden, so wie dies grundsätzlich bereits in der mehrfach genannten DE 100 32 972 A1 beschrieben ist.

Zurückkommend auf die Verbindungselemente 5 bzw. deren Anordnung solchermaßen, dass sie keine Störstelle in der Reibfläche 2d bzw. Anlauffläche der Trommelbremse bilden ist es möglich, das innenliegende, d.h. im Bereich der Reibfläche 2d liegende Kopfteil 5a jedes Verbindungselements nach dem Herstellen dieser Verbindung (d.h. nach dem Einsetzen des Verbindungselements 5) soweit mechanisch abzutragen oder umzuformen, dass die der Drehachse 1 zugewandte Innenwand 2d (bzw. Reibfläche 2d) des Vorsprungs 2c als Anlauffläche einer Trommelbremse fungieren kann.

Zur Gewichtsreduktion der erfindungsgemäßen Verbund-Bremsscheibe kann der Bremsscheibentopf 3 in einer höherfesten Leichtmetall-Legierung (bspw. AlSi7Mg) ausgeführt sein, während der Reibring 2 mit dem Vorsprung 2c in einem geeigneten Gussmaterial ausgeführt sein kann. Wenn der Vorsprung 2c ein Bestandteil eines den oder die Reibring(e) tragenden Mitnehmers ist, kommt hierfür auch ein geeigneter Stahl in Frage. Dabei sei noch darauf hingewiesen, dass eine Vielzahl von Details insbesondere konstruktiver Art durchaus abweichend vom gezeigten Ausführungsbeispiel gestaltet sein kann, ohne den Inhalt der Patentansprüche zu verlassen.

## Patentansprüche

1. Verbund-Bremsscheibe für eine Fahrzeug-Scheibenbremse mit einem Bremsscheibentopf (3), an dem ein Bremsscheiben-Reibring (2) oder ein den oder die Reibringe tragender Mitnehmer abseits der Reibring-Ebene über einen geeigneten Vorsprung (2c) befestigt ist, wozu der sich parallel zur Bremsscheiben-Drehachse (1) erstreckende im wesentliche ringförmige Vorsprung (2c) in Radialrichtung (R) betrachtet bevorzugt innerhalb der Wand (Mantel 3a) des Bremsscheibentopfes liegt und Nieten oder ähnliche Verbindungselemente (5) zwischen der Topfwand (Mantel 3a) und dem Vorsprung (2c) vorgesehen sind,
**dadurch gekennzeichnet, dass** die Verbindungselemente (5) in Radialrichtung (R) derart weit außen liegen, dass die der Drehachse (1) zugewandte Innenwand (2d) des Vorsprungs (2c) als Anlauffläche einer Trommelbremse fungieren kann.

2. Verbund-Bremsscheibe nach Anspruch 1,
**dadurch gekennzeichnet, dass** ein Kopfteil (5a) oder dgl. der Verbindungselemente (5) zumindest im wesentlichen in der Wand des Vorsprungs (2c) versenkt ist.

3. Verbund-Bremsscheibe nach Anspruch 1 oder 2,
**dadurch gekennzeichnet, dass** ein Kopfteil (5a) oder dgl. der Verbindungselemente (5) nach Herstellen der Verbindung soweit mechanisch abgetragen oder umgeformt ist, dass die der Drehachse (1) zugewandte Innenwand (2d) des Vorsprungs (2c) als Anlauffläche einer Trommelbremse fungieren kann.

4. Verbund-Bremsscheibe nach einem der vorangegangenen Ansprüche,
**dadurch gekennzeichnet, dass** der Bremsscheibentopf (3) in einer höherfesten Leichtmetall-Legierung und der Reibring (2) mit Vorsprung (2c) in einem Gusswerkstoff oder der Mitnehmer mit Vorsprung (2c) in Stahl ausgeführt ist.

## Claims

1. A composite brake disc for a motor vehicle disc brake comprising a brake disc chamber (3) to which a brake disc friction ring (2) or an entrainment member carrying the friction ring or rings is fastened at a distance from the friction ring plane via a suitable projection (2c), for which purpose the substantially annular projection (2c), which extends parallel to the axis of rotation (1) of the brake disc, is preferably located, viewed in the radial direction (R), inside the wall (casing 3a) of the brake disc chamber and rivets or similar connecting elements (5) are provided between the chamber wall (casing 3a) and the projection (2c), **characterised in that** the connecting elements (5) are located sufficiently far out in the radial direction (R) that the internal wall (2d) of the projection (2c) that faces the axis of rotation (1) may act as the stop face of a drum brake.

2. A composite brake disc according to claim 1, **characterised in that** a head part (5a) or the like of the connecting elements (5) is sunk at least substantially in the wall of the projection (2c).

3. A composite brake disc according to either claim 1 or claim 2, **characterised in that**, after the connection has been produced, a head part (5a) or the like of the connecting elements (5) is mechanically excavated or shaped to the extent that the internal wall (2d) of the projection (2c) that faces the axis of rotation (1) may act as the stop face of a drum brake.

4. A composite brake disc according to any one of the preceding claims, **characterised in that** the brake disc chamber (3) is made of a light metal alloy of relatively high strength and the friction ring (2) comprising the projection (2c) is made of a casting material or the entrainment member comprising the projection (2c) is made of steel.

## Revendications

1. Disque de frein composite pour un frein à disque de véhicule, comprenant un godet de disque de frein (3) auquel un anneau de friction de disque de frein (2) ou un organe d'entraînement qui porte l'anneau ou les anneau(x) de friction est fixé en dehors du plan de l'anneau de friction, par l'intermédiaire d'une saillie appropriée (2c), saillie (2c) sensiblement annulaire, qui s'étend parallèlement à l'axe de rotation (1) du disque de frein, et se trouve de préférence, vue dans la direction radiale, à l'intérieur de la paroi (robe 3a) du godet de disque de frein ; des rivets ou éléments d'assemblage analogues (5) sont prévus entre la paroi du godet (robe 3a) et la saillie (2c),
**caractérisé en ce que**
les éléments d'assemblage (5) se trouvent suffisamment loin vers l'extérieur dans la direction radiale ( R) pour que la paroi intérieure (2d) de la saillie (2c) dirigée vers l'axe de rotation (1) puisse jouer le rôle de surface d'attaque d'un frein à tambour.

2. Disque de frein composite selon la revendication 1,
**caractérisé en ce qu'**
une partie de tête (5a) ou analogue des éléments d'assemblage (5) est rentrée au moins pour l'essentiel dans la paroi de la saillie (2c).

3. Disque de frein composite selon la revendication 1 ou 2,
**caractérisé en ce qu'**
une partie de tête (5a) ou analogue des éléments d'assemblage (5) est enlevée mécaniquement ou déformée, après la réalisation de l'assemblage, à un degré suffisant pour que la paroi intérieure (2d) de la saillie (2c) dirigée vers l'axe de rotation (1) puisse jouer le rôle de surface d'attaque d'un frein à tambour.

4. Disque de frein composite selon une des revendications précédentes,
**caractérisé en ce que**
le godet de disque de frein (3) est fabriqué en alliage léger à haute résistance et l'anneau de friction (2), avec la saillie (2c), est réalisé en une fonte, ou bien l'organe d'entraînement, avec la saillie (2c), est réalisé en acier.
